**Europäisches Patentamt**

**European Patent Office**

**Office européen des brevets**

(19)

(11) Veröffentlichungsnummer: **0 042 545**
**B1**

# (12) EUROPÄISCHE PATENTSCHRIFT

(45) Veröffentlichungstag der Patentschrift:
28.03.84

(21) Anmeldenummer: 81104483.3

(22) Anmeldetag: 11.06.81

(51) Int. Cl.³: **A 23 K 1/18**, A 23 K 1/14

(54) Verfahren zum Herstellen von Taubenfutter.

(30) Priorität: 21.06.80 DE 3023270

(43) Veröffentlichungstag der Anmeldung:
30.12.81 Patentblatt 81/52

(45) Bekanntmachung des Hinweises auf die Patenterteilung:
28.03.84 Patentblatt 84/13

(84) Benannte Vertragsstaaten:
AT BE CH DE FR GB IT LI LU NL SE

(56) Entgegenhaltungen:
DE - A - 2 462 502
DE - A - 2 621 838
FR - A - 2 196 755

(73) Patentinhaber: **Feikens, Heinrich, Zum Eisenhammer 53,
D-4200 Oberhausen/Rhld. (DE)**
Patentinhaber: **Feikens, Wilhelm, Zum Eisenhammer 53,
D-4200 Oberhausen/Rhld. (DE)**

(72) Erfinder: **Feikens, Heinrich, Zum Eisenhammer 53,
D-4200 Oberhausen/Rhld. (DE)**
Erfinder: **Feikens, Wilhelm, Zum Eisenhammer 53,
D-4200 Oberhausen/Rhld. (DE)**

(74) Vertreter: **Meyer, Alfred, Dipl.-Ing. Dr. jur.,
Schwanenmarkt 10, D-4000 Düsseldorf 1 (DE)**

Verfahren zum Herstellen von Taubenfutter

Die Erfindung betrifft ein Verfahren zum Herstellen von Taubenfutter unter Verwendung von Sojabohnen sowie ein Taubenfutter, das einen Sojabohnenanteil enthält.

Die Anwendung von Sojabohnen als Tierfutter im allgemeinen ist bekannt. Es ist ferner bekannt, Sojabohnen zur Herstellung von Futter zu verwenden, das für Tauben geeignet und bestimmt ist. Tauben nehmen jedoch bisher ganzbelassene Sojabohnen nicht an. Man verwendet daher den Presskuchen, der beim Extrahieren des Sojaöls übrig bleibt. Dieser wird getoastet, gemahlen und dann einem gepressten (pelletierten) Futter zugesetzt. Der Presskuchen ist unter dem Namen Sojaschrot bekannt.

Da das Sojaschrot etwa 40% Eiweiss und 15% Fett enthält, ist es als Zugabe für das gepresste Futter sehr geeignet, insbesondere bei der Aufzucht und als Zugabe an bestimmten Reisetagen der Brieftauben.

Während der Reisezeit der Brieftaube kann jedoch vor den Flügen das oben angeführte Pressfutter mit Sojaschrot nicht eingesetzt werden, da die Brieftaube dann einen höheren Flüssigkeitsbedarf hat, der zu dem Bestreben führt, während der Reise Wasser aufzunehmen.

Tauben sind von Natur an sich Körnerfresser.

Unbearbeitete, im Naturzustand belassene Sojabohnen werden von Tauben bisher nicht angenommen.

Hiervon ausgehend lag der Erfindung die Aufgabe zugrunde, im Rahmen eines Verfahrens zum Herstellen von Taubenfutter die Sojabohnen so zu behandeln, dass sie auch mit unversehrter Schale von den Tauben angenommen werden.

Zur Lösung dieser Aufgabe wird erfindungsgemäss vorgeschlagen, dass die Sojabohnen unter unmittelbarer Einwirkung von Dampf erhitzt und anschliessend einer Trocknung unterzogen werden, die so langsam vor sich geht, dass die Schale der Sojabohnen unversehrt bleibt und die Schale nicht reisst. Der Erfindung lag zunächst die Erkenntnis zugrunde, dass Tauben naturbelassene Sojabohnen deshalb nicht annehmen, weil in diesen Urease und Trypsin enthalten ist. Diese Stoffe werden durch die Erhitzung unwirksam gemacht bzw. zerstört.

Eine weitere Erkenntnis der Erfindung besteht darin, dass die Schale der Sojabohne durch eine Erhitzung nicht beschädigt wird, wenn diese Erhitzung durch unmittelbare Dampfeinwirkung erfolgt und wenn gleichzeitig für eine entsprechend langsame Trocknung gesorgt wird. Es hat sich herausgestellt, dass die Tauben jetzt die erfindungsgemäss behandelten Sojabohnen ohne Schwierigkeiten annehmen.

Im allgemeinen wird eine Erhitzung der Sojabohne mit Dampf ausreichen, wenn die Dauer der Erhitzung 35 bis 40 min beträgt. Urease und Trypsin sind dann zumindest so weitgehend zerstört bzw. abgebaut, dass die Tauben die Sojabohnen annehmen.

Eine Beschädigung der Sojabohnenschale wird mit Sicherheit vermieden, wenn sich die Trocknung erfindungsgemäss über einen Zeitraum von mindestens 30 min erstreckt.

Sojabohnen haben im allgemeinen einen Feuchtigkeitsgehalt von 14 bis 16%. Obwohl ein zu hoher Feuchtigkeitsgehalt die Haltbarkeit beeinträchtigt, ist es gemäss einem weiteren Vorschlag der Erfindung ausreichend, wenn die Trocknung der Sojabohnen nach der Dampfbehandlung nur so lange durchgeführt wird, bis ein Feuchtigkeitsgehalt von etwa 16 bis 17% erreicht ist. Dieser Feuchtigkeitsgehalt hat noch keine nachteiligen Auswirkungen auf die Haltbarkeit.

Ganz allgemein hat die mit Hilfe der Erfindung mögliche Verwendung ganzbelassener Sojabohnen als Bestandteil des Taubenfutters auch noch einen weiteren Vorteil. Während bei der Zubereitung der Sojabohnen als Pressfutter der in den Sojabohnen enthaltene Fettanteil entzogen wurde, ist dieser jetzt in den ganzbelassenen Sojabohnen ebenfalls noch enthalten.

## Patentansprüche

1. Verfahren zum Herstellen von Taubenfutter unter Verwendung von Sojabohnen, dadurch gekennzeichnet, dass die Sojabohnen unter unmittelbarer Einwirkung von Dampf erhitzt und anschliessend einer Trocknung unterzogen werden, die so langsam vor sich geht, dass die Schale der Sojabohnen unversehrt bleibt.

2. Verfahren nach Anspruch 1, dadurch gekennzeichnet, dass die Sojabohnen etwa 35 bis 40 min lang mit Dampf erhitzt werden.

3. Verfahren nach einem der beiden Ansprüche 1 oder 2, dadurch gekennzeichnet, dass sich die Trocknung über einen Zeitraum von mindestens 30 min erstreckt.

4. Verfahren nach einem der vorherigen Ansprüche, dadurch gekennzeichnet, dass die Trocknung nur so lange andauert, bis die Sojabohnen einen Feuchtigkeitsgehalt von etwa 16 bis 17% haben.

5. Taubenfutter als Mischfutter aus ganzen Körnern, dadurch gekennzeichnet, dass es einen Anteil von Sojabohnen mit unversehrter Schale enthält.

## Claims

1. Process for the preparation of pigeon feed using soya-beans, characterised in that the soya-beans are heated by the direct action of steam and then subjected to a drying procedure which takes place so slowly that the hull of the soya-beans remains undamaged.

2. Process according to claim 1, characterised in that the soya-beans are heated with steam for about 35 to 40 min.

3. Process according to claim 1 or 2, characterised in that the drying extends over a period of at least 30 min.

4. Process according to one of the preceding claims, characterised in that drying lasts only until the soya-beans have a moisture content of about 16 to 17%.

5. Pigeon feed as a mixed feed comprising whole kernels, characterised in that it contains a proportion of soya-beans with undamaged hulls.

## Revendications

1. Procédé pour la préparation d'un aliment pour pigeons avec utilisation de graines de soja, caractérisé en ce que les graines de soja sont chauffées sous une action directe de vapeur et sont finalement soumises à un séchage qui se produit si lentement que l'enveloppe des graines de soja reste intacte.

2. Procédé suivant la revendication 1, caractérisé en ce que les graines de soja sont chauffées par de la vapeur pendant environ 30 à 40 min.

3. Procédé suivant l'une quelconque des revendications 1 ou 2, caractérisé en ce que le séchage s'étend sur un laps de temps d'au moins 30 min.

4. Procédé suivant l'une quelconque des revendications précédentes, caractérisé en ce que le séchage ne dure que jusqu'à ce que les graines de soja aient un pourcentage d'humidité d'environ 17%.

5. Aliment pour pigeons sous forme d'aliment mêlé à partir de grains entiers, caractérisé en ce qu'il contient un pourcentage de graines de soja avec enveloppe intacte.